Europäisches Patentamt

European Patent Office

Office européen des brevets

(11) Veröffentlichungsnummer : **0 087 836**
B1

# EUROPÄISCHE PATENTSCHRIFT

(45) Veröffentlichungstag der Patentschrift :
21.01.87

(21) Anmeldenummer : 83200260.4

(22) Anmeldetag : 21.02.83

(51) Int. Cl.⁴ : **C 23 C 16/22,** C 23 C 14/00,
C 23 C 16/00, C 23 C 14/06,
C 22 C 1/10, B 32 B 15/16,
C 21 D 1/74

(54) Kohlenstoff enthaltende Gleitschicht.

(30) Priorität : 27.02.82 DE 3207096
15.12.82 DE 3246361

(43) Veröffentlichungstag der Anmeldung :
07.09.83 Patentblatt 83/36

(45) Bekanntmachung des Hinweises auf die Patenterteilung : 21.01.87 Patentblatt 87/04

(84) Benannte Vertragsstaaten :
AT BE DE GB IT LU NL SE

(56) Entgegenhaltungen :
CH-A-   611 341
DD-A-   145 283
DD-A-   146 307
DE-A- 1 796 122
DE-A- 2 034 896
DE-A- 2 944 301
DE-B- 2 402 960
US-A- 3 869 259
US-A- 3 907 514
Die Akte enthält technische Angaben, die nach dem
Eingang der Anmeldung eingereicht wurden und die
nicht in dieser Patentschrift enthalten sind.

(73) Patentinhaber : Philips Patentverwaltung GmbH
Bilistrasse 80
D-2000 Hamburg 28 (DE)
DE
N.V. Philips' Gloeilampenfabrieken
Groenewoudseweg 1
NL-5621 BA Eindhoven (NL)
BE GB IT LU NL SE AT

(72) Erfinder : Hübsch, Hubertus
Lentersweg 61
D-2000 Hamburg 63 (DE)
Erfinder : Dimigen, Heinz, Dr. rer. nat.
Olshausenstrasse 5
D-2000 Hamburg 52 (DE)

(74) Vertreter : Nehmzow-David, Fritzi-Maria et al
Philips Patentverwaltung GmbH Bilistrasse 80 Postfach 10 51 49
D-2000 Hamburg 28 (DE)

## Beschreibung

Die Erfindung bezieht sich auf eine Gleitschicht auf einem Substrat, die Kohlenstoff enthält sowie auf Verfahren zur Herstellung solcher Gleitschichten.

Zur Verminderung des Reibungswiderstandes fester Gleitflächen werden Schmierstoffe eingesetzt, die den Materialverschleiß und den Energieverbrauch herabsetzen.

Bei der Reibung fester Gleitflächen ist die Reibungs- oder Tangentialkraft K abhängig vom Reibungskoeffizienten $\mu$ der Gleitflächen und der Belastung P, mit der die Gleitflächen aufeinander und gegeneinander reiben : $K = \mu \cdot P$.

Unter Gleitfläche ist die Oberfläche eines Werkstückes zu verstehen, die unter einer gewissen Anpreßkraft auf einer Gegenfläche eines anderen Werkstückes gleitet.

Der Reibungskoeffizient $\mu$ ist von der Oberflächenrauhigkeit der reibenden Flächen, bei glatten Flächen jedoch von der Stoffpaarung, also vom Gleitflächenmaterial, abhangig sowie von der umgebenden Atmosphäre.

Es ist bekannt, den Reibungskoeffizienten der trockenen Reibung durch Überziehen der Gleitflächen mit andersartigen Substanzen zu verändern, um die Reibung zu vermindern und den Verschleiß der reibenden Flächen herabzusetzen.

Die zu diesem Zweck eingesetzten, bekannten Trockenschmiermittel bilden aufgrund ihrer Materialeigenschaften unterschiedliche Gruppen :

1. Stoffe, die aufgrund einer schuppenförmigen Kristallstruktur gute Gleitreibungseigenschaften haben, wie z. B. Graphit oder auch die Chalkogenide von Metallen wie Molybdän, Wolfram und Niob ;

. 2. duktile Metalle, wie Gold, Silber, Blei oder Zinn.

3. Materialien größerer Härte, wie Boride, Silicide, Nitride, Carbide.

Die genannten Stoffe können lose zwischen den Gleitflächen angeordnet oder fest in Form von dünnen Schichten mit Hilfe von in der Dünnschichttechnologie üblichen Verfahren wie z. B. Aufdampfen in Vakuum der Kathodenzerstäubung auf den Gleitflächen angebracht sein.

Alle diese Trockenschmierstoffe haben ihre besonderen Vorteile und Nachteile.

Ein spezieller Nachteil von Graphit als Trockenschmierstoff ist, daß er unter atmosphärischen Bedingungen zwar einen niedrigen Gleitreibungskoeffizienten ($\mu \approx 0,1$ bis $0,2$) hat, was erwünscht ist, in trockener Atmosphäre jedoch einen stark erhöhten Gleitreibungskoeffizienten ($\mu \approx 0,8$) zeigt ; dies hat zur Folge, daß der Verschleiß der reibenden Flächen in trockener Atmosphäre groß ist, da der Graphit ein sehr weiches, d. h. wenig abriebfestes Material ist, und die Reibung darüberhinaus durch den erhöhten Gleitreibungskoeffizienten des Graphits erhöht ist.

Mit Chalkogeniden der oben genannten Art können Reibungsprobleme bei nicht zu hohen Temperaturen gut gelöst werden, problematisch wird die Anwendung dieser Materialien jedoch bei höheren Temperaturen. $MoS_2$ zersetzt sich in Luft bei Temperaturen oberhalb 400 °C. Eine derartige chemische Nichtbeständigkeit begrenzt also den Einsatz von Materialien, die grundsätzlich als Trockenschmierstoff gut geeignet wären. $MoS_2$ hat außerdem im Gegensatz zu Graphit in trockener Atmosphäre einen sehr niedrigen Gleitreibungskoeffizienten ($\mu \approx 0,04$), unter normalen atmosphärischen Bedingungen steigt der Gleitreibungskoeffizient $\mu$ jedoch auf ungefähr 0,2 an.

Ein genereller Nachteil bei Materialien mit schuppenförmiger Struktur — was für Graphit wie auch für $MoS_2$ gilt — ist überdies ihre mangelnde Abriebfestigkeit sowie ihre geringe Härte.

Duktile Metalle wie Gold, Silber, Blei und Zinn sind gute Trockenschmierstoffe, da diese Materialien verhältnismäßig niedrige Gleitreibungskoeffizienten haben ($\mu \approx 0,2$ bis $0,4$). Da diese Metalle jedoch sehr weich sind — was ihnen andererseits ihre guten Gleiteigenschaften gibt — haben auch sie nur eine geringe Abriebfestigkeit.

Um nun Schichten höherer Abriebfestigkeit zu erhalten, sind Materialien größerer Härte, wie Silicide, Boride, Nitride und Carbide an Gleitflächen eingesetzt worden.

Es hat sich gezeigt, daß mit diesen Materialien größerer Härte zwar eine gute Abriebfestigkeit erreicht werden kann, die Gleitreibungskoeffizienten liegen hier jedoch mit Werten von $\mu \approx 0,3$ bis $0,7$ weit über den Werten der wegen ihrer niedrigen Gleitreibungskoeffizienten als Trockenschmierstoffe gut geeigneten Materialien Graphit ($\mu \approx 0,1$ bis $0,2$) oder Molybdänsulfid $MoS_2$ ($\mu \approx 0,04$).

Von besonders großer technischer Bedeutung sind Reibpaarungen, bei denen aus Stahl geformte Bauteile ohne (hinreichende) hydrodynamische Schmierung aufeinander gleiten. Verlangt wird von solchen Reibpaarungen in der Regel sehr hohe Lebensdauer, d. h. geringer Verschleiß sowie eine niedrige, von den Umgebungsbedingungen unabhängige Reibung.

Aus DE-OS 29 26 080 ist eine Kohlenstoffschicht mit diamantähnlicher Kristallstruktur als Reibpartner gegen Stahl bekannt, die unter Vakuum- oder Inertgas-Bedingungen einen besonders niedrigen Gleitreibungskoeffizienten $\mu$ bei gleichzeitig einer hohen Abriebfestigkeit und Härte aufweist ; diesen Kohlenstoffschichten haftet jedoch der Nachteil an, daß sie nicht einen von der relativen Luftfeuchtigkeit weitgehend unabhängigen niedrigen Reibungskoeffizienten aufweisen.

Der Erfindung liegt daher die Aufgabe zugrunde, eine Kohlenstoff enthaltende Gleitschicht, die die Funktion eines Trockenschmierstoffes hat, derart zu verbessern, daß sie einen von der relativen Luftfeuchtigkeit unabhängigen, niedrigen Reibungskoeffizienten aufweist und dabei außerdem die

2

günstigen Eigenschaften der bekannten Kohlenstoffschicht beibehält, nämlich auf insbesondere Stahl gut haftet, verschleißfest und hart ist und einen niedrigen Gleitreibungskoeffizienten gegen Stahl aufweist.

Diese Aufgabe wird erfindungsgemäß dadurch gelöst, daß die durch Chemical oder Physical Vapour Deposition hergestellte Schicht 50,1 bis 99,9 Atom% Kohlenstoff und 0,1 bis 49,9 Atom% mindestens eines metallischen Elementes, jedoch keine thermodynamisch stabilen Carbide enthält.

Nach vorteilhaften Weiterbildungen der Erfindung enthält die Gleitschicht 60 bis 97, insbesondere 80 bis 95 Atom% Kohlenstoff und 3 bis 40, insbesondere 5 bis 20 Atom% mindestens eines metallischen Elementes.

Nach vorteilhaften Weiterbildungen der Erfindung ist das metallische Element ein Element der Gruppe Ib, IIb, III, IV, Va, VIa, VIIa und/oder VIII des Periodischen Systems der Elemente (PSE).

Hierzu sind in erster Linie die Elemente Kupfer (Cu), Silber (Ag), Gold (Au), Zink (Zn), Cadmium (Cd), Bor (B), Aluminium (Al), Gallium (Ga), Indium (In), Thallium (Tl), Silicium (Si), Titan (Ti), Germanium (Ge), Zirkonium (Zr), Zinn (Sn), Hafnium (Hf), Blei (Pb), Vanadium (V), Niob (Nb), Tantal (Ta), Chrom (Cr), Molybdän (Mo), Wolfram (W), Mangan (Mn), Rhenium (Re), Eisen (Fe), Ruthenium (Ru), Osmium (Os), Kobalt (Co), Rhodium (Rh), Iridium (Ir), Nickel (Ni), Palladium (Pd) und/oder Platin (Pt) zu zählen.

Nach einer weiteren besonders vorteilhaften Ausbildung der Erfindung ist das metallische Element Tantal, Ruthenium, Wolfram, Eisen oder Silicium.

Verfahren zur Herstellung dieser Gleitschicht sind dadurch gekennzeichnet, daß Kohlenstoff und das (die) gewählte(n) metallische(n) Element(e) mittels Kathodenzerstäubung eines aus Kohlenstoff und dem (den) gewählten Element(en) gebildeten Targets oder daß Kohlenstoff und das (die) gewählte(n) metallische(n) Element(e) durch Kathodenzerstäubung eines aus dem (den) gewählten metallischen Element(en) gebildeten Targets in einer Atmosphäre aus Inertgas und einem Kohlenwasserstoffgas abgeschieden werden.

Nach einer besonders vorteilhaften Ausbildung des Verfahrens wird der Abscheidungsprozeß zunächst in einer Atmosphäre begonnen, die nur Inertgas enthält und der Abscheidungsprozeß wird anschließend fortgesetzt unter Inertgas-Kohlenwasserstoffgas-Atmosphäre. Hiermit ist der Vorteil verbunden, daß zunächst eine Schicht abgeschieden wird, die nur aus dem (den) ausgewählten metallischen Element(en) besteht, die sich als haftungsfördernde Schicht erwiesen hat, und daß danach die eigentliche Gleitschicht, die neben dem metallischen Element den Kohlenstoff enthält, abgeschieden wird.

Der Erfindung liegt die Erkenntnis zugrunde, daß die in bezug auf das Reibungsverhalten und die Haftung an insbesondere Stahl an sich sehr guten Eigenschaften der bekannten Kohlenstoffschicht mit diamantähnlicher Struktur noch verbessert werden können, wenn der die Schicht bildende Kohlenstoff in eine Matrix aus metallischen Elementen eingelagert ist.

Diese Matrix verbessert die Härte und entscheidend die Haftung der Kohlenstoffschicht am Substrat. Es können im Rahmen der Erfindung die unterschiedlichsten metallischen Elemente zum Aufbau einer Metallmatrix, in die der Kohlenstoff quasi eingebaut wird, eingesetzt werden, wenn sie sich nur mittels Chemical oder Physical Vapour Deposition auf ein Substrat aufbringen lassen. Es ist dabei durchaus nicht erforderlich, daß es sich bei dem metallischen Element um ein oben bereits beschriebenes, für Trockenschmierzwecke bereits bekanntes duktiles Metall handelt.

Hierzu wird auf die unten folgenden Ausführungen zu Fe-C-Schichten verwiesen.

Kohlenstoff allein zeigt beträchtlich unterschiedliche Werte für den Gleitreibungskoeffizienten z. B. gegen Stahl je nach Ausmaß der relativen Feuchtigkeit der umgebenden Atmosphäre. Das spezifische Feuchte-unabhängige Reibungsverhalten der erfindungsgemäßen Schichten gegenüber einem Reibpartner wird insbesondere durch die Wahl der dem Kohlenstoff zugesetzten Materialkomponente aus den genannten möglichen Gruppen des Periodischen Systems bestimmt.

Diese bestimmt darüberhinaus entscheidend die Haftung der Schichten auf der jeweils benötigten Unterlage, was für die Anwendung mechanisch beanspruchter Schichten sehr wesentlich ist.

Es ist hierbei hervorzuheben, daß der Anteil des metallischen Elementes in der Schicht auf jeden Fall nicht größer als 49,9 Atom% sein darf, da sonst die erwünschten Eigenschaften der Gleitschicht sich entscheidend verschlechtern.

Es hat sich gezeigt, daß nahezu alle metallischen Elemente geeignet sind, als Matrix, in die der Kohlenstoff der Gleitschicht eingebaut wird, verwendet werden zu können.

Es ist dabei überraschend, daß die Metallmatrix in Verbindung mit Kohlenstoff so ausgezeichnete Gleitschichten mit niedrigen Gleitreibungskoeffizienten abgibt.

Aufgrund der Materialeigenschaften der Einzelkomponenten dieser Schichtkompositionen war diese Wirkung durchaus nicht in jedem Fall zu erwarten ; die Reibungsbeiwerte von Stahlpartnern, wozu z. B. Eisen zu zählen ist, liegen im Bereich von $\mu \approx 0,6$ bis $\approx 1$ in Normalatmosphäre. Damit wäre Eisen ein durchaus ungeeignetes Material, um eine Schmierschicht gegen Stahl aufzubauen.

In der Kombination mit Kohlenstoff jedoch ergeben sich vorzüglich niedrige Reibungsbeiwerte mit $\mu \approx 0,14$ bei Normalatmosphäre (50 % relative Luftfeuchtigkeit).

Die mit der Erfindung erzielbaren Vorteile bestehen insbesondere darin, daß die erfindungsgemäßen Gleitschichten nicht nur hart und verschleißfest sind und sehr gut am Substrat haften, sondern auch einen von der relativen Luftfeuchtigkeit weitgehend unabhängigen niedrigen Gleitreibungskoeffizienten gegen Stahl haben. Ein weiterer Vorteil ist darin zu sehen, daß die erfindungsgemäßen Gleitschichten durch ihre Abriebfestigkeit auch den Verschleiß von Werkzeugoberflächen herabsetzen können, also als Vergütungsschichten für insbesondere Stahlwerkzeuge eingesetzt werden können.

Ein besonderer Vorteil des Verfahrens zur Herstellung der erfindungsgemäßen Gleitschichten ist darin zu sehen, daß auf besonders einfache Weise ohne Prozeßunterbrechung zunächst eine die Haftung der Gleitschichten begünstigende Schicht aus dem die Matrix bildenden metallischen Element abgeschieden werden kann ; gerade im Hinblick auf Stahlsubstrate entsteht auf diese Weise eine gut haftende, optimale Zwischenschicht aus einem metallischen Element zwischen dem Stahlsubstrat und der eigentlichen, aus Kohlenstoff und mindestens einem metallischen Element bestehenden Gleitschicht.

Unter metallischen Elementen sind im Rahmen der Erfindung im engeren Sinne diejenigen chemischen Elemente zu verstehen, die rein im festen Zustand lichtundurchlässig sind, Glanz infolge hohen Lichtreflexionsvermögens zeigen, den elektrischen Strom und Wärme gut leiten, durch Walzen, Ziehen, Pressen, Schneiden und dergleichen plastisch verformbar sind und Atomgitter besitzen. Es sind im weiteren Sinn jedoch auch die chemischen Elemente unter metallischen Elementen zu verstehen, die keine Nichtmetalle sind und ausgesprochen metallischen Charakter haben, wie die manchmal als Halbmetalle, manchmal als Metalle bezeichneten Elemente, z. B. Silicium (vergleiche z. B. Lueger, Lexikon der Technik, Deutsche Verlagsanstalt Stuttgart, 4. Auflage 1961, Band 3, Seite 636).

Es ist wichtig, darauf hinzuweisen, daß es sich bei den beanspruchten Schichten nicht um thermodynamisch stabile Carbide, etwa TiC oder WC, handelt : die beschriebenen Schichten sind in der Regel röntgenamorph und in jeder beliebigen Zusammensetzung herstellbar. Der für niedrige Reibungswerte erforderliche Kohlenstoffanteil liegt — sehr niedrige Reibungskoeffizienten werden oft erst mit 80 bis 95 Atom% erreicht — erheblich über der für eine chemische Verbindung erforderlichen stöchiometrisch exakten Zusammensetzung. Darüberhinaus sind viele der beanspruchten Schichtkompositionen als stabile Carbide unbekannt (z. B. Ru-C).

Die stabilen Carbide (z. B. TiC, WC) weisen Reibungskoeffizienten gegenüber Stahl als Reibpartner von $\mu \approx 0,2$ bis 0,4 auf, die erheblich über den Werten liegen, welche die beanspruchten Schichten zeigen. Für im Rahmen der Erfindung hergestellte W-C-Schichten mit 91 Atom% Kohlenstoff und 9 Atom% Wolfram wurden bei einer relativen Luftfeuchtigkeit von 50 % bei Stahl als Reibpartner ein Reibungskoeffizient $\mu \approx 0,14$ und bei einer zweiten W-C-Schicht gleicher Zusammensetzung als Reibpartner ein Reibungskoeffizient $\mu \approx 0,06$ gemessen.

Damit sind die erfindungsgemäßen Schichten von großer Bedeutung als Schmier- und Schutzschichten z. B. für Gleitlager und oszillierende Reibpaarungen (z. B. Scherköpfe von elektrischen Rasierapparaten) oder Messer z. B. zum Schneiden von Metallplatten.

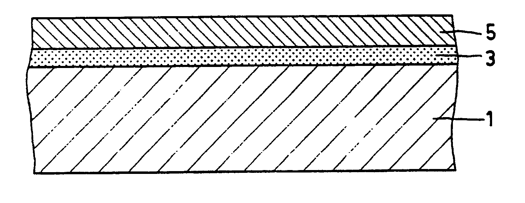

Anhand der Zeichnung werden Ausführungsbeispiele der Erfindung beschrieben und in ihrer Wirkungsweise erläutert.

Die Figur zeigt im Schnitt eine Schichtenfolge aus einer auf einem Substrat angebrachten Gleitschicht und einer die Haftung am Substrat fördernden Zwischenschicht.

1. Herstellung von Eisen-Kohlenstoff-Schichten.

In der Figur ist ein Substrat 1, z. B. aus Chrom/Nickel-Stahl, mit einer haftungsfördernden Zwischenschicht 3 aus reinem Eisen und einer Gleitschicht 5 aus Eisen und Kohlenstoff im Schnitt dargestellt. Diese Schichten können beispielsweise wie folgt erhalten werden : durch Kathodenzerstäubung eines reinen Eisen-Targets in einer Atmosphäre aus einem Inertgas eines Drucks von 20 mbar, z. B. Argon, und eines Kohlenwasserstoffgases eines Drucks von 0,2 mbar, z. B. Acetylen, wurden Schichten mit einer Dicke von 0,9 µm und einer Mikrohärte von $15 \cdot 10^3$ N/mm² hergestellt. Als Substrat dienten flache Ringe aus 100 Cr 6-Stahl. Die Schichten, welche ca. 20 Atom% Eisen, 78 Atom% Kohlenstoff und als Rest auf 100 Atom% unbekannte Verunreinigungen (es wird angenommen, daß es sich hier um Gasanteile aus der Atmosphäre des Kathodenzerstäubungsprozesses handelt), enthalten, weisen eine hervorragende Haftung auf ihrer Unterlage auf, was u. a. darauf zurückzuführen ist, daß während der ersten Minuten des Beschichtungsprozesses der Kathodenzerstäubungsprozeß in reiner Inertgas-Atmosphäre durchgeführt wurde, so daß zunächst eine reine Eisenschicht abgeschieden wurde. Die weitere Beschichtung erfolgte dann in der oben genannten Atmosphäre. Die so erzeugten Schichten weisen einen Gleitreibungskoeffizienten in trockener Atmosphäre (< 0,1 % relative Feuchte) von $\mu \approx 0,06$ und in feuchter Atmosphäre ($\approx 80$ % relative Feuchte) von $\mu \approx 0,15$ auf.

Schichten, die durch Zerstäuben eines Eisen- bzw. eines Eisen- Kohlenstoff-Targets in einer Inertgas-Kohlenwasserstoffgas-Atmosphäre hergestellt werden, weisen eine hohe Härte im Bereich von $15 \cdot 10^3$ bis $30 \cdot 10^3$ N/mm² (Knoop-Härte) auf. Die Gleitreibungskoeffizienten gegen Stahl als Reibpartner liegen, abhängig von den Beschichtungsbedingungen, in der Regel im Bereich von $\mu \approx 0,05$ bis 0,3. So läßt sich für eine Schicht, welche < 49,9 Atom% Eisen sowie > 50,1 Atom% Kohlenstoff enthält, ein von der relativen Luftfeuchtigkeit viel weniger abhängiger Reibungskoeffizient erreichen, als es für reine Kohlenstoffschichten der Fall ist. Bei reinem Kohlenstoff liegen die Werte für den Reibungskoeffizienten $\mu$ gegen Stahl bei einer relativen Luftfeuchtigkeit von < 0,1 % bei $\mu \approx 0,02$ und bei einer relativen Luftfeuchtigkeit von 95 % bei $\mu \approx 0,2$.

Eine Eisen-Kohlenstoff-Schicht anderer Zusammensetzung, nämlich mit 84 Atom% Kohlenstoff und 16 Atom% Eisen wurde nach gleichen Verfahrensbedingungen hergestellt und zeigte bei einer relativen Luftfeuchtigkeit von 50 % Reibungskoeffizienten $\mu \approx 0,14$ sowohl gegen Stahl als auch gegen eine Schicht gleicher Zusammensetzung als Reibpartner (vergleiche Tabelle 4).

Grundsätzlich sind die Zusammensetzungen der Schichten in bezug auf die an ihrem Aufbau beteiligten Mengen an Kohlenstoff und metallischem Element (metallischen Elementen) steuerbar über die Targetzusammensetzung bzw. über den Anteil eines Kohlenwasserstoffgases in der Zerstäubungsatmosphäre, z. B. in dem Sinne, daß, wenn die Konzentration des Kohlenstoffes in der Schicht höher sein soll, der Anteil des Kohlenwasserstoffgases in der Zerstäubungsatmosphäre entsprechend erhöht wird. Die genauen Verhältnisse lassen sich durch einfache Experimente ermitteln.

In der nachfolgenden Tabelle 1 ist dargestellt, in welcher Weise der Reibungskoeffizient $\mu$ für Eisen-Kohlenstoff-Schichten einer Zusammensetzung mit 3,7 Atom% Eisen, 9,5 Atom% Kohlenstoff und 0,8 Atom% Restgas mit einem Reibpartner in Form einer Schicht gleicher Zusammensetzung sowie mit Stahl als Reibpartner durch unterschiedliche relative Luftfeuchtigkeit beeinflußt wird.

Tabelle 1

| Gleitschicht | | Relative Luftfeuchtigkeit [%] | $\mu_1$ | $\mu_2$ |
|---|---|---|---|---|
| 3,7 | At% Fe | 90 | 0,15 | 0,13 |
| | + | 50 | 0,14 | 0,12 |
| 95,5 | At% C | 10 | 0,13 | 0,11 |
| | + | 1 | 0,07 | 0,07 |
| 0,8 | At% Restgas | $\angle\, 0,4$ | 0,04 | 0,05 |

$\mu_1$ = Reibungskoeffizient bei einem Reibpartner in Form einer Schicht gleicher Zusammensetzung wie die Gleitschicht.

$\mu_2$ = Reibungskoeffizient gegen Stahl als Reibpartner.

Als weitere Ausführungsbeispiele für die Herstellung von Eisen-Kohlenstoff-Schichten wurden weitere Zusammensetzungen im Bereich von 65,2 bis 95,5 Atom% Kohlenstoff und 32,9 bis 2,3 Atom% Eisen mit einem Rest auf 100 Atom%, bestehend aus beim Kathodenzerstäubungsprozeß in die entstehende Schicht eingebauten Gasen, auf ihr Reibungsverhalten hin untersucht (vergleiche Tabelle 2). Die Schichten wurden unter gleichen Verfahrensparametern hergestellt wie für die oben beschriebene Eisen-Kohlenstoff-Schicht angegeben. Es wurden Reibungskoeffizienten $\mu$ von $\approx 0,10$ bis $\approx 0,17$ in einer Atmosphäre mit 50 % relativer Luftfeuchtigkeit bei Stahl als Reibpartner und Werte für $\mu$ von $\approx 0,13$ bis $\approx 0,22$ gegen eine Schicht gleicher Zusammensetzung als Reibpartner gemessen. Die speziellen Angaben für die Schichtzusammensetzungen und die zugehörigen Reibungskoeffizienten ergeben sich aus Tabelle 2.

Tabelle 2

| Fe [At%] | C [At%] | Restgase [At%] | $\mu_1$ | $\mu_2$ |
|---|---|---|---|---|
| 2,3 | 93 | 4,7 | 0,16 | 0,16 |
| 3,7 | 95,5 | 0,8 | 0,14 | 0,12 |
| 14,8 | 78,1 | 7,1 | 0,14 | 0,17 |
| 20,3 | 78,7 | 1,0 | 0,13 | 0,15 |
| 32,9 | 65,2 | 1,9 | 0,22 | 0,10 |

$\mu_1$ = Reibungskoeffizient bei 50 % relativer Luftfeuchtigkeit und einem Reibpartner in Form einer Schicht gleicher Zusammensetzung wie die Gleitschicht.

$\mu_2$ = Reibungskoeffizient bei 50 % relativer Luftfeuchtigkeit und Stahl als Reibpartner.

2. Herstellung einer Tantal-Kohlenstoff-Schicht.

Ebenso wie bei dem Beispiel der Eisen-Kohlenstoff-Schicht wurden durch Kathodenzerstäubung eines reinen Tantal-Targets in einer Atmosphäre aus einem Inertgas eines Drucks von 20 mbar, z. B. Argon, und eines Kohlenwasserstoffgases eines Drucks von 0,2 bis 1,0 mbar, z. B. Acetylen, Schichten mit einer Dicke von 0,9 $\mu$m hergestellt. Als Substrat dienten ebenfalls Stahlringe oder Silicium-Einkristallscheiben.

Die Schichten mit 95 Atom% Kohlenstoff und 5 Atom% Tantal weisen in einer Atmosphäre mit einer relativen Luftfeuchtigkeit von 50 % einen Reibungskoeffizienten gegen Stahl von $\mu \approx 0,08$ und gegen eine Schicht gleicher Zusammensetzung als Reibpartner von $\mu \approx 0,03$ auf (vergleiche Tabelle 4).

3. Herstellung einer Ruthenium-Kohlenstoff-Schicht.

Durch Kathodenzerstäubung eines reinen Ruthenium-Targets in einer Atmosphäre aus einem Inertgas eines Drucks von 20 mbar, z. B. Argon, und eines Kohlenwasserstoffgases eines Druckes von 0,2 bis 1,0 mbar, z. B. Acetylen, wurden Schichten einer Dicke von 0,9 $\mu$m hergestellt. Als Substrat dienten ebenfalls Stahl-Ringe oder Silicium-Einkristallscheiben.

Die Schichten, welche 18 Atom% Ruthenium und 82 Atom% Kohlenstoff enthalten, weisen einen Gleitreibungskoeffizienten in einer Atmosphäre mit 50 % relativer Luftfeuchtigkeit auf von $\mu \approx 0,05$ bei Stahl als Reibpartner und von $\mu \approx 0,03$ bei einer Schicht gleicher Zusammensetzung als Reibpartner (vergleiche Tabelle 4).

4. Herstellung von Wolfram-Kohlenstoff-Schichten.

Durch Kathodenzerstäubung eines reinen Wolfram-Targets in einer Atmosphäre aus einem Inertgas eines Drucks von 20 mbar, z. B. Argon, und eines Kohlenwasserstoffgases eines Drucks von 0,2 bis 1,0 mbar, z. B. Acetylen, werden Schichten einer Dicke von 0,9 $\mu$m und einer Mikrohärte von $21 \cdot 10^3$ N/mm$^2$ hergestellt. Als Substrat dienten wie für die anderen Ausführungsbeispiele beschrieben Stahl-Ringe oder Silicium-Einkristallscheiben.

Die Schichten, welche 9 Atom% Wolfram und 91 Atom% Kohlenstoff enthalten, weisen einen Gleitreibungskoeffizienten in einer Atmosphäre mit 50 % relativer Luftfeuchtigkeit auf von $\mu \approx 0,14$ mit Stahl als Reibpartner und von $\mu \approx 0,06$ bei einer Schicht gleicher Zusammensetzung als Reibpartner (vergleiche Tabelle 4).

Als weitere Ausführungsbeispiele für die Herstellung von Wolfram-Kohlenstoff-Schichten wurden weitere Zusammensetzungen im Bereich von 66,2 bis 96,5 Atom% Kohlenstoff und 30,6 bis 1,6 Atom% Wolfram mit einem Rest auf 100 Atom% bestehend aus beim Kathodenzerstäubungsprozeß in die entstehende Schicht eingebauten Gasen, auf ihr Reibungsverhalten hin untersucht (vergleiche Tabelle 2). Die Schichten wurden unter gleichen Verfahrensparametern hergestellt, wie oben für die Eisen-Kohlenstoff-, Tantal-Kohlenstoff- und Ruthenium-Kohlenstoff-Schichten angegeben. Es wurden Reibungskoeffizienten $\mu$ von $\approx 0,10$ bis $\approx 0,17$ in einer Atmosphäre mit 50 % relativer Luftfeuchtigkeit bei Stahl als Reibpartner gemessen. Die speziellen Angaben für die Schichtzusammensetzungen und die zugehörigen Reibungskoeffizienten ergeben sich aus Tabelle 3.

In Tabelle 3 ist auch eine Schichtzusammensetzung angegeben mit 59,3 Atom% Wolfram, 36,7 Atom% Kohlenstoff und 4,0 Atom% Restgasanteil aus der Kathodenzerstäubungsatmosphäre : diese Schichtzusammensetzung liegt außerhalb des beanspruchten Zusammensetzungsbereiches. Sie zeigte eine schlechte Haftung am Substrat, einen hohen Verschleiß bei Reibungsversuchen und einen Reibungskoeffizienten $\mu \approx 0,4$ bei Stahl als Reibpartner in einer Atmosphäre mit 50 % relativer Luftfeuchtigkeit.

Bei den Wolfram-Kohlenstoff-Schichten gemäß Tabelle 3 zeigt sich, daß die Schichten einen mit zunehmenden Kohlenstoffanteil abnehmenden Reibungskoeffizienten der Gleitreibung aufweisen.

Tabelle 3

| W [At%] | C [At%] | Restgase [At%] | $\mu_2$ | Bemerkungen |
|---|---|---|---|---|
| 1,6 | 94,5 | 3,9 | 0,17 | |
| 2,8 | 96,5 | 0,7 | 0,10 | |
| 4,9 | 95 | 0,1 | 0,13 | |
| 5,3 | 92,9 | 1,8 | 0,16 | |

(Fortsetzung)

| W. [At%] | C [At%] | Restgase [At%] | $\mu_2$ | Bemerkungen |
|---|---|---|---|---|
| 8,9 | 90,3 | 0,8 | 0,14 | |
| 30,6 | 66,2 | 3,2 | 0,14 | Härte 30 · $10^3$ N/mm$^2$ |
| 59,3 | 36,7 | 4,0 | ~ 0,4 | sehr hoher – Verschleiß – |

$\mu_2$ = Reibungskoeffizient bei 50 % relativer Luftfeuchtigkeit und Stahl als Reibpartner.

5. Herstellung einer Silicium-Kohlenstoff-Schicht.

Durch Kathodenzerstäubung eines reinen Silicium-Targets in einer Atmosphäre aus einem Inertgas eines Drucks von 20 mbar, z. B. Argon, und eines Kohlenwasserstoffgases eines Drucks von 0,2 bis 1,0 mbar, z. B. Acetylen, wurden Schichten mit einer Dicke von 0,9 μm hergestellt. Als Substrat dienten ebenfalls Stahl-Ringe oder Silicium-Einkristallscheiben.

Die Schichten, welche 20 bis 5 Atom% Silicium und 80 bis 95 Atom% Kohlenstoff enthalten, weisen einen Gleitreibungskoeffizienten gegen Stahl in einer Atmosphäre mit 50 % relativer Luftfeuchtigkeit von $\mu \approx 0,07$ auf (vergleiche Tabelle 4).

Tabelle 4

| Gleitschicht [Zusammensetzung] | Kohlenstoff [At%] | Metallisches Element [At%] | $\mu_1$ | $\mu_2$ |
|---|---|---|---|---|
| Si-C | 80-95 | 20-5 | – | 0,07 |
| Ta-C | 95 | 5 | 0,03 | 0,08 |
| W-C | 91 | 9 | 0,06 | 0,14 |
| Ru-C | 82 | 18 | 0,03 | 0,05 |
| Fe-C | 84 | 16 | 0,14 | 0,14 |

$\mu_1$ = Reibungskoeffizient bei 50 % relativer Luftfeuchtigkeit und einem Reibpartner in Form einer Schicht gleicher Zusammensetzung wie die Gleitschicht.
$\mu_2$ = Reibungskoeffizient bei 50 % relativer Luftfeuchtigkeit und Stahl als Reibpartner.

In der nachfolgenden Tabelle 5 ist dargestellt, in welcher Weise der Reibungskoeffizient μ für Wolfram-Kohlenstoff-Schichten einer Zusammensetzung mit 1,6 Atom% Wolfram, 94,5 Atom% Kohlenstoff und 3,9 Atom% Restgasanteil mit einem Reibpartner in Form einer Schicht gleicher Zusammensetzung sowie mit Stahl als Reibpartner durch unterschiedliche relative Luftfeuchtigkeit beeinfluß wird.

(Siehe Tabelle 5 Seite 8 f.)

Tabelle 5

| Gleitschicht [Zusammen- setzung] | Relative Luftfeuchtigkeit [%] | $\mu_1$ | $\mu_2$ |
|---|---|---|---|
| 1,6 At% W | 90 | 0,10 | 0,16 |
| + | 50 | 0,08 | 0,12 |
| 94,5 At% C | 10 | 0,06 | 0,07 |
| + | 1 | 0,02 | 0,05 |
| 3,9 At% Restgase | < 0,4 | 0,01 | 0,02 |

$\mu_1$ = Reibungskoeffizient bei einem Reibpartner in Form einer Schicht gleicher Zusammensetzung wie die Gleitschicht.

$\mu_2$ = Reibungskoeffizient gegen Stahl als Reibpartner.

**Patentansprüche**

1. Gleitschicht auf einem Substrat, die Kohlenstoff enthält, dadurch gekennzeichnet, daß die durch Chemical oder Physical Vapour Deposition hergestellte Schicht 50,1 bis 99,9 Atom% Kohlenstoff und 0,1 bis 49,9 Atom% mindestens eines metallischen Elementes, jedoch keine thermodynamisch stabilen Carbide enthält.

2. Gleitschicht nach Anspruch 1, dadurch gekennzeichnet, daß sie 60 bis 97 Atom% Kohlenstoff und 40 bis 3 Atom% mindestens eines metallischen Elementes enthält.

3. Gleitschicht nach Anspruch 2, dadurch gekennzeichnet, daß sie 80 bis 95 Atom% Kohlenstoff und 20 bis 5 Atom% mindestens eines metallischen Elementes enthält.

4. Gleitschicht nach einem der Ansprüche 1 bis 3, dadurch gekennzeichnet, daß das metallische Element ein Element der Gruppe Ib, IIb, III, IV, Va, VIa, VIIa und/oder VIII des Periodischen Systems der Elemente (PSE) ist.

5. Gleitschicht nach Anspruch 4, dadurch gekennzeichnet, daß das metallische Element Silicium (Si), Tantal (Ta), Wolfram (W), Ruthenium (Ru) und/oder Eisen (Fe) ist.

6. Verfahren zur Herstellung einer Gleitschicht gemäß den Ansprüchen 1 bis 5, dadurch gekennzeichnet, daß Kohlenstoff und das (die) gewählte(n) metallische(n) Element(e) durch Kathodenzerstäubung eines aus Kohlenstoff und dem (den) gewählten Element(en) gebildeten Targets abgeschieden werden.

7. Verfahren zur Herstellung einer Gleitschicht gemäß den Ansprüchen 1 bis 5, dadurch gekennzeichnet, daß Kohlenstoff und das (die) gewählte(n) metallische(n) Element(e) durch Kathodenzerstäubung eines aus dem (den) gewählten metallischen Element(en) gebildeten Targets in einer Atmosphäre aus Inertgas und einem Kohlenwasserstoffgas abgeschieden werden.

8. Verfahren nach Anspruch 7, dadurch gekennzeichnet, daß der Abscheidungsprozeß zunächst in einer Atmosphäre begonnen wird, die nur Inertgas enthält und daß der Abscheidungsprozeß anschließend unter Inertgas-Kohlenwasserstoffgas-Atmosphäre fortgesetzt wird.

9. Verfahren nach den Ansprüchen 7 und 8, dadurch gekennzeichnet, daß als Inertgas Argon eingesetzt wird.

10. Verfahren nach den Ansprüchen 7 und 8, dadurch gekennzeichnet, daß als Kohlenwasserstoffgas Acetylen eingesetzt wird.

11. Verwendung der Gleitschicht gemäß den Ansprüchen 1 bis 5 für die Vergütung von oszillierenden Reibpaarungen.

12. Verwendung der Gleitschicht gemäß den Ansprüchen 1 bis 5 für die Vergütung von Werkzeugen, wie Bohr-Stanz-Schneid- und Umformwerkzeugen.

**Claims**

1. A carbon-containing sliding layer, characterized in that the layer manufactured by chemical or physical vapour deposition comprises 50.1 to 99.9 at% carbon and 0.1 to 49.9 at% of at least one metallic element but does not comprise thermodynamically stable carbides.

2. A sliding layer as claimed in Claim 1, characterized in that it comprises 60 to 97 at% carbon and 40 to 3 at% of at least one metallic element.

3. A sliding layer as claimed in Claim 2, characterized in that it comprises 80 to 95 at% carbon and 20 to 5 at% of at least one metallic element.

4. A sliding layer as claimed in any of the Claims 1 to 3, characterized in that the metallic element is an element of the group Ib, IIb, III, IV, Va, VIa, VIIa and/or VIII of the Periodic Table of Elements (PTE).

5. A sliding layer as claimed in Claim 4, characterized in that the metallic element is silicon (Si), tantalum (Ta), tungsten (W), ruthenium (Ru) and/or iron (Fe).

6. A method of manufacturing a sliding layer as claimed in Claims 1 to 5, characterized in that the carbon and the selected metallic elements(s) are deposited by cathode sputtering of a target formed from carbon and the selected element(s).

7. A method of manufacturing a sliding layer as claimed in Claims 1-5, characterized in that the carbon and the selected metallic element(s) are deposited by cathode sputtering of a target formed from the selected metallic element(s) in an atmosphere of inert gas and a hydrocarbon gas.

8. A method as claimed in claim 7, characterized in that the deposition process is first started in an atmosphere which contains only inert gas and that the deposition process is then continued under an inert gashydrocarbon gas atmosphere.

9. A method as claimed in Claims 7 and 8, characterized in that argon is used as an inert gas.

10. A method as claimed in Claims 7 and 8, characterized in that acetylene is used as a hydrocarbon gas.

11. The use of the sliding layer as claimed in Claims 1 to 5 for the coating of oscillating friction combinations.

12. The use of the sliding layer as claimed in Claims 1 to 5 for the coating of tools, for example, drilling tools, punching tools, cutting tools and deformation tools.

**Revendications**

1. Couche de glissement sur un substrat, contenant du carbone, caractérisée en ce que la couche réalisée par dépôt chimique ou physique de vapeur contient 50,1 à 99,9 % en atomes de carbone et 0,1 à 49,9 % en atomes d'au moins un élément métallique, mais ne contient pas de carbure stable thermodynamique.

2. Couche de glissement selon la revendication 1, caractérisée en ce qu'elle contient 60 à 97 % en atomes de carbone et 40 à 3 % en atomes d'au moins un élément métallique.

3. Couche de glissement selon la revendication 2, caractérisée en ce qu'elle contient 80 à 95 % en atomes de carbone et 20 à 5 % en atomes d'au moins un élément métallique.

4. Couche de glissement selon l'une des revendications 1 à 3, caractérisée en ce que l'élément métallique est un élément du groupe Ib, IIb, III, IV, Va, VIa, VIIa et/ou VIII de la classification périodique des éléments chimiques.

5. Couche de glissement selon la revendication 4, caractérisée en ce que l'élément métallique est silicium (Si), tantale (Ta), tungstène (W), ruthénium (Ru) et/ou fer (Fe).

6. Procédé pour la réalisation d'une couche de glissement selon les revendications 1 à 5, caractérisé en ce que le carbone et l'élément métallique choisi ou les éléments métalliques choisis sont déposés par pulvérisation cathodique d'une cible en carbone et d'élément choisi ou des éléments choisis.

7. Procédé pour la réalisation d'une couche de glissement selon les revendicatioins 1 à 5, caractérisé en ce que le carbone et l'élément métallique choisi ou les éléments métalliques choisis sont déposés par pulvérisation cathodique d'une cible formée à partir de l'élément choisi ou des éléments métalliques dans une atmosphère de gaz inerte et d'un gaz d'hydrocarbure.

8. Procédé selon la revendication 7, caractérisé en ce que le processus de dépôt est d'abord commencé dans une atmosphère, qui ne contient que de gaz inerte et que le processus de dépôt est ensuite poursuivi dans une atmosphère de gaz inerte-gaz d'hydrocarbure.

9. Procédé selon les revendications 7 et 8, caractérisé en ce que comme gaz inerte, on utilise de l'argon.

10. Procédé selon les revendications 7 et 8, caractérisé en ce que comme gaz d'hydrocarbure, on utilise de l'acétylène.

11. Application de la couche de glissement selon les revendications 1 à 5 pour le revêtement de couples frottants oscillants.

12. Application de la couche de glissement selon les revendications 1 à 5, pour le revêtement d'outils, comme des outils d'alésage, de découpage, de coupage et de déformation.